Europäisches Patentamt

European Patent Office

Office européen des brevets

(11) Veröffentlichungsnummer: **0 174 657**
**B1**

(12) **EUROPÄISCHE PATENTSCHRIFT**

(45) Veröffentlichungstag der Patentschrift: **16.05.90**

(51) Int. Cl.5: **F 02 B 23/02,** F 02 F 3/26

(21) Anmeldenummer: **85111529.5**

(22) Anmeldetag: **12.09.85**

(54) **Verfahren zum Betreiben einer Hubkolbenbrennkraftmaschine und Hubkolbenbrennkraftmaschine zum Durchführen dieses Verfahrens.**

(30) Priorität: **13.09.84 DE 3433559**

(43) Veröffentlichungstag der Anmeldung:
**19.03.86 Patentblatt 86/12**

(45) Bekanntmachung des Hinweises auf die
Patenterteilung:
**16.05.90 Patentblatt 90/20**

(84) Benannte Vertragsstaaten:
**CH DE FR GB IT LI**

(56) Entgegenhaltungen:
**DE-B-1 029 613**
**DE-C- 455 626**
**DE-C- 625 293**
**US-A-1 944 352**
**US-A-4 485 779**

(73) Patentinhaber: **Klöckner-Humboldt-Deutz**
**Aktiengesellschaft**
**Deutz-Mülheimer-Strasse 111 Postfach 80 05 09**
**D-5000 Köln 80 (DE)**

(72) Erfinder: **Finsterwalder, Gerhard, Dipl.-Ing.**
**Saaler Strasse 31**
**D-5060 Bergisch Gladbach 1 (DE)**

Courier Press, Leamington Spa, England.

**Beschreibung**

Die vorliegende Erfindung bezieht sich auf ein Verfahren zum Betreiben einer Hubkolbenbrennkraftmaschine, mit einem Brennraum (17), in dem Luft durch die Bewegung eines Kolbens (1) verdichtet und Brennstoff von einer in der Zylinderachse angeordneten Einspritzdüse (4) eingespritzt wird und der Brennstoff mit der verdichteten Luft ein Brennstoff-Luftgemisch bildet, wobei der Brennraum (17) im Bereich des Kolbenumfanges einen torusartigen Raum (6) sowie eine im Zylinderkopf (3) angeordnete Mulde (8) aufweist und die Verbrennung des Brennstoff-Luftgemisches in mehreren Phasen abläuft. Ferner bezieht sich die Erfindung auf eine Hubkolbenbrennkraftmaschine zur Durchführung dieses Verfahrens.

Hubkolbenbrennkraftmaschinen, die mit dem bekannten Wirbelkammerverfahren arbeiten, zeigen zwar geringe Schadstoffemissionen im Abgas, ihr Verbrauch liegt hingegen relativ hoch. Um einen geringen Verbrauch zu erzielen, sind verschiedene Direkteinspritzverfahren bekanntgeworden, durch die einerseits der Verbrauch zwar merklich gesenkt werden konnte, bei denen andererseits jedoch relativ hohe Schadstoffemissionen festgestellt werden mußten. Zur Verminderung dieser Schadstoffemissionen ist bekannt, Katalysatoren und Filter in dem Abgasstrom vorzusehen.

In der DE-B-I 029 613 ist eine Hubkolbenbrennkraftmaschine mit Direkteinspritzung beschrieben. Der Brennstoff wird aus einer in der Mitte des Zylinderkopfes angeordneten Mehrlochdüse auf einen in der Kolbenmitte vorgesehenen flachen Kegel tangential aufgespritzt und soll durch seine kinetische Energie in einen torusförmigen Brennraum im Kolbenboden gelangen. Die Abgaswerte dieser direkt einspritzenden Brennkraftmaschine sind jedoch hinsichtlich Ruß-, CO-, CH- und $NO_x$-Emission nicht zufriedenstellend, da das Auftreffen der Einspritzstrahlen zur Kraftstoffanhäufung auf dem zentralen Kegel führt.

Der Erfindung liegt die Aufgabe zugrunde, ein Verfahren zum Betreiben einer Hubkolbenbrennkraftmaschine zu schaffen, mit dem einerseits ein niedriger Brennstoffverbrauch erzielbar ist und andererseits — ohne zusätzliche Maßnahmen — bessere Abgaswerte zu erreichen sind. Ferner soll eine Hubkolbenbrennkraftmaschine zur Durchführung des Verfahrens bereitgestellt werden.

Mit dem in Anspruch 1 angegebenen Verfahren wird ein niedriger Brennstoffverbrauch erzielt und darüber hinaus, werden sehr gute Abgaswerte erreicht, ohne daß zusätzliche Maßnahmen vorzusehen sind. Dieses erfindungsgemäße Verfahren läßt sich im wesentlichen in vier Phasen aufteilen. In der ersten Phase zündet das gerade entstandene Brennstoff-Luft-Gemisch an einem vorgegebenen Entzündungsort. Aufgrund des Luftmangels kann sich dabei nur wenig $No_x$ bilden. Während der zweiten Phase strömt das Gemisch in einer radialen Quetschströmung von dem Entzündungsort weg. Da infolge des geringen Quetschvolumens Luftmangel herrscht, entsteht weiterhin wenig $NO_x$. Außerdem wird durch die fortschreitende Flammenfront die Geschwindigkeit der radial nach außen gerichteten Quetschströmung gesteigert. In einer dritten Phase gelangt das teilverbrannte Gemisch in einen Raum, in dem sich — aufgrund besonderer konstruktiver Gestaltung — ein Wirbel ausbildet. Die in diesem Raum eingeschlossene Luft liefert die zur weiteren Verbrennung notwendige Luft, wobei ein Luftüberschuß herrscht. Nun findet die eigentliche Hauptverbrennung des in der Quetschströmung optimal aufbereiteten Gemisches statt. Durch die große Strömungsenergie im Wirbel, die durch die hohe Strömungsgeschwindigkeit der Quetschströmung hervorgerufen ist, ist die Verbrennung insbesondere CH-, CO- und rußarm. Wegen des hohen Luftüberschusses sind die Temperaturen und Drücke — gegenüber bekannten Verfahren relativ — gering, wodurch auch in dieser Phase die Entstehung von $NO_x$ weitgehend verhindert wird. Außerdem bleibt so die Bauteilbelastung in vorteilhafter Weise niedrig. In der vierten Phase strömt das brennende Gemisch unter Beibehaltung der Wirbeldrehrichtung aus dem Wirbel heraus und beenden dabei den Verbrennungsvorgang. Diese Phase liegt bereits deutlich im Abwärtshub des Kolbens. Die Verbrennungsgase strömen dabei in das sich vergrößernde Volumen des Quetschspaltes der zweiten Phase ein. Durch diese turbulente Antiquetschströmung wird die Verbrennung rasch und vollständig beendet. Insgesamt weist die spät aber rasch ablaufende Verbrennung neben dem guten Kraftstoffverbrauch und der geringen Schadstoffemission auch in vorteilhafter Weise niedrige Verbrennungsdrücke und Verbrennungsdruckanstiege auf, wodurch die Geräuschemission einer nach diesem Verfahren arbeitenden Hubkolbenbrennkraftmaschine in vorteilhafter Weise gering gehalten wird.

Die Ausbildung des Wirbels als torusförmiger Wirbel nach Anspruch 2 begünstigt die Anwendung einer völlig gleichförmigen Quetschströmung. Das radial vom Entzündungsort gleichmäßig wegströmende, entzündete Brennstoff-Luft-Gemisch wird dabei nach einer gewissen Strecke mit Quetschwirkung in einen torusartigen, konzentrisch zum Entzündungsort angeordneten Raum geleitet. Der in diesem Raum induzierte Wirbel ist torusförmig, wobei das Gemisch um die ringförmige Achse des erzeugten Toruskörpers kreist. Der torusförmige Wirbel ist über den Umfang des Zylinders in etwa gleichmäßig ausgebildet, so daß im gesamten Verbrennungsraum eine schadstoffarme Verbrennung abläuft.

In vorteilhafter Weiterbildung wird die Luft drallfrei in den Brennraum eingeleitet. Dadurch werden die Strömungsverluste beim Einströmvorgang der Luft in den Zylinder minimiert. Der Liefergrad einer nach diesem Verfahren arbeitenden Hubkolbenbrennkraftmaschine ist dadurch in vorteilhafter Weise hoch.

Der Brennstoff wird in der Nähe des Einspritzortes von einer Glühzündungsquelle entzündet. Hierdurch ist eine sichere Entzündung des Brennstoffes zu einem vorbestimmbaren Zeitpunkt und an einem vorbestimmbaren Ort sichergestellt. Als Glühzündungsquelle kann zweckmäßig eine Glühkerze Anwendung finden. Es kann auch vorteilhaft sein, als Glühzündungsquelle einen isolierenden Einsatz im Kolben vorzusehen, der als Wärmespeicher dient. Bei Verwendung einer Glühzündungsquelle kann auch ein zündunwilliger Brennstoff wie Methanol oder Alkohol als Betriebsmittel eingespritzt werden.

Eine Hubkolbenbrennkraftmaschine zur Durchführung des erfindungsgemäßen Verfahrens ist in Anspruch 10 angegeben. Der Brennraum weist eine im Querschnitt etwa halbkreis- oder kreisförmige Aussparung auf, die eine im folgenden als torusartiger Raum benannte Ausnehmung bildet. Der torusartige Raum ist koaxial um die Zylinder- bzw. Kolbenachse angeordnet. Gelangt der Kolben beim Kompressionshub in die Nähe des oberen Totpunktes, wird das Gemisch durch den immer enger werdenden Spalt zwischen Kolben und Zylinderkopf verdichtet und mit zunehmender Geschwindigkeit in den torusartigen Raum gedrückt. Es entsteht zwangsläufig eine von innen nach außen gerichtete, radiale Quetschströmung, die bei Erreichen des torusartigen Raumes in diesen umgeleitet wird und darin in eine Wirbelbewegung übergeht. Die wirbel haben als Drehachse die kreisförmige Achse des torusartigen Raumes, die koaxial zur Zylinder- bzw. Kolbenachse verläuft und eine Ebene bestimmt, die mit der Zylinder- bzw. Kolbenachse einen rechten Winkel bildet.

Der torusartige Raum ist vorzugsweise am brennraumseitigen Ende des Kolbens in diesem angeordnet. Er liegt dabei vorzugsweise am äußeren Umfang des Kolbens. Der torusartige Raum ist dabei über seinen Umfang zum Zylinderrohr und zum Brennraum geöffnet ausgebildet. Im Zylinderkopf ist eine insbesondere kegelstumpfförmig oder zylinderförmig ausgestaltete Mulde angeordnet. In diese Mulde mündet die Einspritzdüse sowie eine Glühzündungsquelle, insbesondere eine Glühkerze. Auf diese Weise ist der Entzündungsort durch die Glühzündungsquelle fest vorgegeben, wobei der Entzündungsort ferner durch die Mulde begrenzt ist.

Die dem Kolben zugewandte Fläche des Zylinderkopfes sowie der dem Brennraum zugewandte Kolbenboden liegen vorzugsweise parallel zueinander, wobei beidorallel zueinander, wobei beide Flächen möglichst glatt ausgebildet sind. Auf diese Weise ist der Strömungswiderstand für die Quetschströmung möglichst gering gehalten. In besonderer Ausgestaltung sind die beiden Flächen zum Zylinderkopf gewölbt, wodurch die Quetschströmung bereits vor Erreichen des torusartigen Raumes eine Geschwindigkeitskomponente erfährt, die senkrecht in den torusartigen Raum hinein gerichtet ist.

Zur Minderung des Verschleißes durch den Einspritzstrahl ist der Mulde im Zylinderkopf gegenüberliegende Bereich des Kolbenbodens gehärtet und insbesondere mit einem Einsatz versehen. Hierbei kann es zweckmäßig sein, auch den gesamten Brennraum zur Verschleißminderung und vor allem zur Wärmeisolation mit Keramik, insbesondere Zirkonoxyd, auszukleiden. Der Kolben, der Zylinderkopf und das Zylinderrohr können dann besonders vorteilhaft aus Schwermetall, wie Stahl oder Grauguß, gefertigt sein.

Bei einer derartigen Hubkolbenbrennkraftmaschine wird während des Kompressionstaktes die drallfrei angesaugte Luft zum großen Teil in den torusartigen Raum im Kolben verdrängt. Durch die breite Öffnung des torusartigen Raumes zum Brennraum im Zylinder hin entstehen hierbei kaum Überströmverluste. Kurz vor Erreichen des oberen Totpunktes des Kolbens wird durch die Einspritzdüse in die Mulde des Zylinderkopfes der gesamte Brennstoff für einen Arbeitstakt möglichst insgesamt in der Zündverzugszeit, d.h. möglichst rasch, eingespritzt. Dies kann entweder durch einen hohen Einspritzdruck oder durch einen besonders großen Austrittsquerschnitt für den Brennstoff erreicht werden. Vorteilhaft kann sowohl eine senkrecht auf den Kolbenboden spritzende Einloch-Düse als auch eine radial spritzende Mehrlochdüse verwendet werden.

Die erste Phase der Verbrennung findet innerhalb der Mulde im Zylinderkopf statt. Der Einspritzstrahl, welcher mit der vorhandenen Luft ein Brennstoff-Luft-Gemisch bildet, wird von einer in die Mulde hineinragenden Glühkerze an einem vorbestimmten Entzündungsort entzündet. Die axiale Höhe der Mulde ist so gewählt, daß der entzündete Brennstoffstrahl weitgehend ohne reflektierende Spritzer am Kolbenboden umgelenkt wird. Das Gemisch verteilt sich radial gleichmäßig auf dem Kolbenboden und strömt als Quetschströmung in den Spalt zwischen Kolbenboden und Zylinderkopf ein. Dieser Spalt wirkt — bezogen auf das Wirbelkammerverfahren — als in der Verbrennungsphase der Hubkolbenbrennkraftmaschine existierende "Vorkammer", die während der übrigen Takte keine Strömungsverlute erzeugt. Das in dem Spalt befindliche Gemisch wird durch den Verbrennungsdruckanstieg der Flammenfront in seiner radial nach außen gerichteten Strömungsgeschwindigkeit weiter gesteigert. Bis hierhin ist die Verbrennung im fetten Bereich abgelaufen, wodurch nur wenig Stickoxyde entstehen.

In der dritten Phase der Verbrennung gelangt das Gemisch radial zum Zylinderrohr und wird von dort in den torusartigen Raum umgeleitet, wobei es in die torusartige Wirbelbewegung übergeht. In dem torusartigen Raum ist eine größere Menge unverbrannter Luft enthalten. Hier findet jetzt die Hauptverbrennung unter Luftüberschuß statt, der je nach Motorlast mehr oder weniger groß ist. Die hohe Gemischbildungsenergie des torusartigen Wirbels begünstigt eine CH-, CO- und rußarme Verbrennung. Zudem hält der große Luftüberschuß die Verbrennungsdrücke und Temperaturen — bezogen auf andere bekannte Verfahren — auf einem relativ niedrigen Niveau, wobei ebenfalls die $NO_x$-Emission während dieser Phase gering bleibt. Der Kolben hat jetzt bereits seine Bewegungsrichtung umgekehrt und entfernt sich vom Zylinderkopf. Die Verbrennungsgase strömen unter Beibehaltung der Wirbeldrehrichtung aus dem torusartigen Raum heraus in den Kolbenspalt und treiben dabei den Kolben nach unten. Es entsteht eine stark turbulente Antiquetschströmung, die auf den Entzündungsort gerichtet ist. Gleichzeitig wird die Verbrennung vollständig und rasch beendet.

Eine derart ausgeführte Hubkolbenbrennkraftmaschine zeichnet sich durch niedrigen Verbrauch und geringe Schadstoffemissionen aus. Voraussetzung dafür ist eine rasche und scharfe Einspritzung kurz vor Erreichen des oberen Totpunkts des Kolbens. Im Leerlauf oder bei sehr niedriger Teillast findet die Verbrennung überwiegend im Kolbenspalt statt und dehnt sich nicht auf den ganzen Brennraum aus. Es entfallen die hohe Drossel- und Wärmeverluste der üblichen Vor- und Wirbelkammern, während dennoch die hohen Gemischbildungsenergien dieser Systeme erreicht werden. Außerdem sind die Gemischbildungsenergien drehzahl- und lastabhängig, was sich ebenfalls positiv auf eine gute Abgasqualität auswirkt. Die späte aber rasche Verbrennung bewirkt außerdem neben den geringen Schadstoffemissionen und dem günstige Brennstoffverbrauch auch niedrige Verbrennungsdrücke und Druckanstiege, was eine niedrige Geräuschemission der Hubkolbenbrennkraftmaschine zur Folge hat. Da das gesamt Kolbenspaltvolumen der Verbrennung nutzbar gemacht wird und das Verfahren mit gutem Liefergrad arbeitet, ist die Leistungsausbeute hoch. Wegen der insgesamt nötigen thermischen Bauteilbelastung ist die Hubkolbenbrennkraschine besonders vorteilhaft als Aufladenmotor zu verwenden.

Je stärker die radial von innen nach außen gerichtete Strömungsbewegung des Brennstoff-Luft-Gemisches in der Phase zwei ist, desto größer werden die Vorteile einer nach dem beschriebenen Verfahren arbeitenden Hubkolbenbrennkraftmaschine.

Bei der Verwendung eines zündunwilligen Brennstoffs sind Zündhilfen notwendig. Gemäß der Ausbildung nach den Ansprüchen 22 und 23 wird hierzu der Einsatz im Kolbenboden als Hohlkörper ausgebildet, der als Zündhilfe bei zündunwilligen Brennstoffen dient. Dabei wird die Glühkerze nur als Starthilfe verwendet. Die dem Einsatz axial gegenüberliegende Einspritzdüse spritzt einen kleinen Teil des Brennstoffes durch eine Bohrung in den Hohlraum des Hohlkörpers, in dem daraufhin eine Verbrennung stattfindet. Gleichzeitig wird der Hauptteil des Brennstoffs vorzugsweise durch etwa radial ausgerichtete Düsenaustrittsöffnungen in die Mulde im Zylinderkopf des Hauptbrennraumes eingespritzt. Es kann jedoch auch vorteilhaft sein, einen Teil des nur senkrecht auf den Kolben spritzenden Brennstoffs in den Hohlkörper bzw. den extern unbeheizten Glühzündungskörper zu leiten. Die in dem Hohlraum anfallenden heißen Verbrennungsgase werden aus einer Vielzahl von radial weiter außen kreisförmig angeordneten Bohrungen herausgedrückt und entzünden den im Kolbenspalt befindlichen Brennstoff. Der Brennstoff kann sich darüber hinaus auch an dem durch vorangegangene Verbrennungen aufgeheizten Keramikkörper selbst entzünden. Auf diese Weise ist eine sichere, intensive Zündung des Brennstoffs sichergestellt.

Der in den Hohlraum eingespritzte Brennstoff kann sowohl zündunwilliger als auch getrennt eingespritzter zündwilliger Brennstoff, insbesondere Dieselöl, sein (Zündstrahlverfahren).

Weitere Merkmale der Erfindung ergeben sich aus den weiteren Ansprüchen, der folgenden Beschreibung und den Zeichnungen, in denen schematisch einige bevorzugte Ausführungsbeispiele der Erfindung dargestellt sind. Es zeigt:

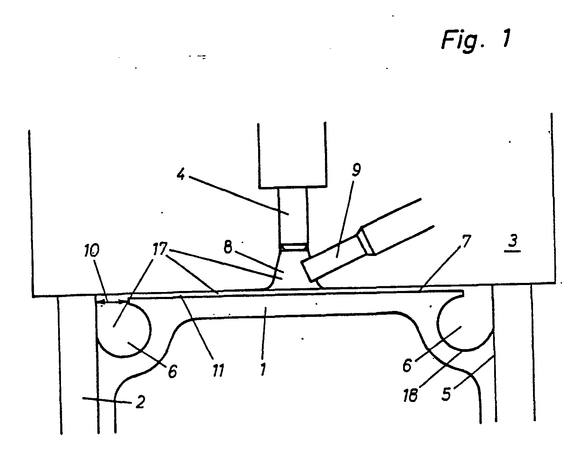

Fig. 1 einen Axialschnitt durch einen Teil eines Zylinders einer Hubkolbenbrennkraftmaschine,

Fig. 2 eine Darstellung der einzelnen Teile anhand eines Schnittes gemäß Fig. 1, wobei die Figur im einzelnen zeigt:

a) den Kompressionstakt des Kolbens vor Erreichen des oberen Totpunkts

b) den Kolben im oberen Totpunkt

c) den Arbeitstakt des Kolbens nach dem oberem Totpunkt,

Fig. 3 eine Darstellung gemäß Fig. 1 mit einer Mehrloch-Einspritzdüse und einem Keramikeinsatz,

Fig. 4 eine Darstellung gemäß Fig. 1 eines anderen Ausführungsbeispiels mit einem im Kolbenboden eingesetzten Hohlkörper,

Fig. 5 eine Darstellung gemäß Fig. 1 eines weiteren Ausführungsbeispiels mit einem einen torusartigen Raum im Kolbenboden bildenden zentralen Einsatz im Kolben.

Der Brennraum 17 im Zylinder einer Hubkolbenbrennkraftmaschine ist durch ein Zylinderrohr 2, einen im Zylinderrohr 2 auf und abgehenden Kolben 1 und einen das Zylinderrohr 2 verschließenden Zylinderkopf 3 begrenzt. Die brennraumseitige Wandung des Zylinderkopfes 3 und die Fläche des Kolbenbodens 7 des Kolbens 1 liegen parallel zueinander und sind vorzugsweise glatt ausgebildet. Es kann vorteilhaft sein, beide Flächen zum Zylinderkopf hin gewölbt auszubilden. Weiterhin sind diese beiden Flächen in einem rechten Winkel zur Kolbenachse angeordnet. Im Zylinderkopf 3 ist zentrisch und koaxial zur Kolbenachse eine kegelstumpfförmige Mulde 8 vorgesehen, wobei die Mulde 8 mit der großen Grundfläche des Kegelstumpfkörpers dem Kolbenboden 7 zugewandt ist. Die kleinere Grundfläche des Kegelstumpfkörpers wird von einer Einspritzdüse axial durchstoßen, deren Einspritzöffnungen in die Mulde 8 münden. Ferner ragt seitlich eine Glühkerze 9 in die Mulde 8 hinein. In dem Kolben 1 ist an dessen Umfang 5 und am Kolbenboden 7 eine im Querschnitt kreisförmige Aussparung 18 eingelassen, die einen torusartigen Raum 6 bildet. Der Kolbenboden 7 endet radial mit Abstand vor dem Zylinderrohr 2, wodurch ein Ringspalt 10 gebildet ist, über den der torusartige Raum 6 mit dem übrigen Brennraum 17 verbunden ist. Der Ringspalt 10 ist derart bemessen, daß die Gasströmung vom torusartigen Raum 6 in den Brennraum 17 und in Gegenrichtung weitgehend ohne Strömungsverluste stattfindet. Im oberen Totpunkt des Kolbens 1 ist zwischen dem Kolbenboden 7 mit dem Zylinderkopf 3 ein enger Spalt 11 gebildet.

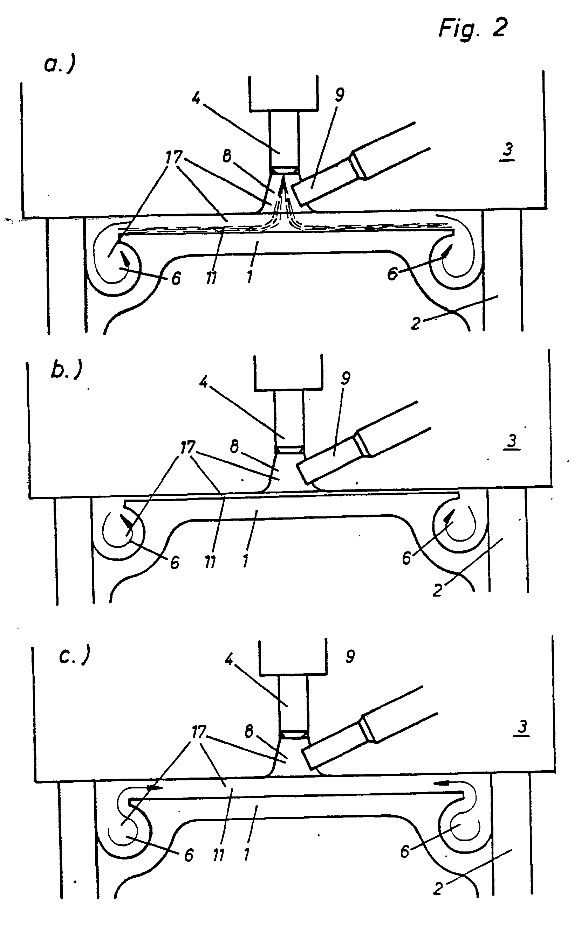

Der Ablauf des erfindungsgemäßen Verbrennungsverfahrens sei anhand der Darstellungen in Fig. 2 erläutert. Die Fig. 2a zeigt einen im Kompressionstakt der Hubkolbenbrennkraftmaschine befindlichen Kolben 1 kurz vor Erreichen des oberen Totpunkts. Die bis dahin zwischen dem Kolbenboden 7 und dem Zylinderkopf 3 weitgehend in Ruhe befindliche Luft wird nun infolge der Annäherung des Kolbens 1 an den Zylinderkopf 3 radial nach außen in den torusartigen Raum 6 gedrückt. Es entsteht somit eine radial nach außen auf das Zylinderrohr 2 gerichtete Quetschströmung. Je näher der Kolben 1 an den oberen Totpunkt gelangt, desto intensiver wird diese Strömung. Kurz vor Erreichen des oberen Totpunkts des Kolbens 1 wird durch die Einspritzdüse 4 Brennstoff als Einspritzstrahl in die Mulde 8 eingebracht. Dabei wird in möglichst kurzer Zeit der gesamte Brennstoff für einen Arbeitstakt eingespritzt. Die Einspritzdauer muß so gewählt sein, daß vor Erreichen des oberen Totpunkts der Brennstoff eingebracht ist, so daß die Verbrennungsphase im oberen Totpunkt oder kurz danach beginnen kann. Vorteilhaft ist für diesen Zweck eine senkrecht auf den Kolbenboden 7 spritzende Einlochdüse oder eine sternförmig abspritzende Mehrlochdüse vorgesehen. Bei der Einlochdüse liegt der Einspritzstrahl etwa parallel zur Kolbenachse. Bei der Mehrlochdüse sind die Strahlen in ihrem Winkel an die seitliche Neigung der kegelstumpfförmigen Mulde 8 angepaßt. Die Strahlen treffen alle etwa unter gleichem Winkel auf den Kolbenboden auf. Der Brennstoff beginnt sich zumindest mit einem kleinen Teil sofort mit der in der Mulde 8 befindlichen Luft zu einem Brennstoff-Luft-Gemisch zu vermengen. Die Glühkerze 9 entzündet das Brennstoff-Luft-Gemisch an einem vorbestimmten Entzündungsort. Beim Auftreffen des Brennstoffstrahls auf den Kolbenboden 7 ist dieser aufgrund der gewählten freien Strahllänge schon so weit zerstäubt, daß er reflektionsfrei am Kolbenboden 7 in alle radialen Richtungen umgelenkt wird. Es ist zur Verschleißminderung vorteilhaft, diese Auftreffstelle des Kolbenbodens 7 zu härten oder mit einem besonderen schützenden Einsatz zu versehen. Durch den sich verengenden Spalt 11 wird die radial nach außen gerichtete Quetschströmung des Gemisches gesteigert. Die Verbrennung läuft vom Entzündungsort als Flammenfront in den Kolbenspalt und durch diesen hindurch. Infolge des Druckanstieges wird die radiale Geschwindigkeit der Quetschströmung im Kolbenspalt noch mehr erhöht und damit die Flammenfrontgeschwindigkeit ebenfalls gesteigert. Da die gesamte Brennstoffladung in sehr kurzer Zeit eingebrcht wurde und da das Luftvolumen in der Mulde 8 und im Spalt 11 im Verhältnis zu dem Luftvolumen im torusartigen Raum 6 klein ist, läuft die Verbrennung bis zu diesem Zeitpunkt unter Luftmangel ab. Die erste Phase der Verbrennung beginnt im oberen Totpunkt, während die zweite Phase kurz nach dem oberen Totpunktes weitgehend abgeschlossen ist.

Das radial nach außen auf das Zylinderrohr 2 strömende, brennende Gemisch gelangt in der dritten Phase in den torusartigen Raum 6. Dort läuft mit der darin eingeschlossenen Luft die hauptsächliche Verbrennung unter Luftüberschuß ab. Der torusartige Wirbel liefert dabei die für eine schadstoffarme Verbrennung notwendige Gemischbildungsenergie. Die Verbrennungsgase strömen dann beim Heruntergehen des Kolbens unter Beibehaltung der Wirbeldrehrichtung aus dem torusartigen Raum 6 in Form einer Antiquetschströmung wieder in den Spalt 11 ein. Diese Strömung ist radial auf den Entzündungsort gerichtet. Während dieser vierten Phase wird die Verbrennung rasch abgeschlossen (Fig. 2c). Der torusartige Raum kann in vorteilhafter Weise statt im Kolben 1 ebenso im Zylinderkopf 3 angeordnet sein. In diesem Fall wäre der Kolben 1 völlig plan und parallel zum Zylinderkopf 3 auszubilden. Die Wirkungsweise ist in diesem Fall unverändert, wobei auch jetzt der ringfömige Spalt 10 so groß bemessen ist, daß die Luftströmung weitgehend ungehindert in den torusartigen Raum 6 gelangen kann.

Die besonders niedrigen Schadstoffemissionen der erfindungsgemäßen Hubkolbenbrennkraftmaschine werden einerseits durch die zunächst mit Luftmangel dann mit großem Luftüberschuß ablaufende Verbrennung und andererseits durch die sehr hohe Gemischbildungsenergie der Quetschströmung und des torusartigen Wirbels begünstigt. Die erfindungsgemäße Hubkolbenbrennkraftmaschine weist auch sehr geringe Drossel und Wärmeverluste auf. Der Spalt 11 wirkt als zeitweilige Vorkammer, welche nur zu dem gerade benötigten Zeitpunkt vorhanden ist und ansonsten keine Verluste erzeugt.

Um einer nach dem erfindungsgemäßen Brennverfahren arbeitenden Hubkolbenbrennkraftmaschine möglichst wenig Wärme während der Quetschströmungsphase zu entziehen, ist die Ausführung zumindest des Zylinderkopfes 3 und des Kolbens 1 aus Schwermetall von besonderer Bedeutung. Schwermetall weist ein hohes Wärmespeichervermögen und ein relativ schlechtes Wärmeleitvermögen (im Gegensatz zu Aluminium) auf, wodurch im warmgelaufenen Zustand der Hubkolbenbrennkraftmaschine die Temperaturen in dem Spalt 11 auf hohem Niveau gehalten werden und die Verbrennung dort nicht durch zu starken Wärmeentzug zum Erliegen kommt. Andererseits verhindert die große Oberfläche des Kolbenspalts eine Kompressionszündung des dort befindlichen Gemisches und ermöglicht so die Verbrennung in der Flammenfront. Es kann auch zweckmäßig sein, den Kolbenboden 7 und den Zylinderkopf 3 mit einer Keramikschicht zu überziehen. Zur Verschleißverminderung ist der Einsatz einer Keramikplatte im Kolbenboden 7 der Mulde 8 gegenüberliegend vorteilhaft, da dadurch evtl. Verschleißerscheinungen des Kolbens durch den direkt auf den Kolben 1 gerichteten Strahl der Einspritzdüse 4 vermieden werden.

Die Glühkerze 9 kann als flammbeheizte Glühkerze oder als elektrische Glühkerze ausgebildet sein. Bei einem Betrieb der Hubkolbenbrennkraftmaschine mit handelsüblichem Dieselbrennstoff ist diese Glühkerze 9 bei besonders wärmedichter Konstruktion der Mulde 8 zumeist nur für die Startphase notwendig. Für einen reibungslosen Betrieb der Hubkolbenbrennkraftmaschine kann es jedoch vorteilhaft sein, die Glühkerze 9 auch in warmgelaufenem Zustand weiter in Betrieb zu halten.

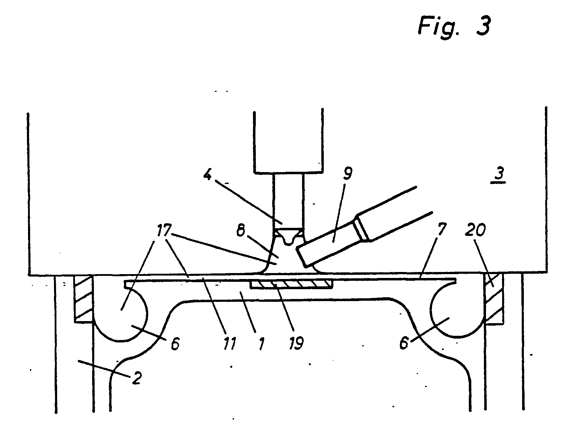

Fig. 3 zeigt eine weitere Ausbildung der Erfindung, wobei der grundsätzliche Aufbau und die Funktion mit dem zuvor beschriebenen Ausführungsbeispiel identisch ist. Anstelle einer Einspritzdüse 4, die mit nur einem Strahl arbeitet, ist hier eine Mehrloch-Einspritzdüse vorgesehen. In den Kolbenboden 7 ist ein Einsatz in Form einer Platte 19 vorgesehen. Die Platte 19 ist dabei genau der Einspritzdüse 4 gegenüberliegend angeordnet. Im weiteren ist das Zylinderrohr 2 am inneren Umfang mit einem eingesetzten Ring 20 versehen. Der Ring 20 grenzt auf seiner Innenseite den torusartigen Raum 6 ab. Sowohl der Ring 20 als auch die Platte 19 sind vorzugsweise und vorteilhaft aus Keramik wie Zirkonoxyd oder Zirkondioxyd, hergestellt. Durch diese vorteilhaften Ausbildungen sind die besonders wärmebeanspruchten Teile der Hubkolbenbrennkraftmaschine durch besonders widerstandsfähige Einsätze geschützt, so daß die Lebensdauer der Bubkolbenbrennkraftmaschine verlängert ist.

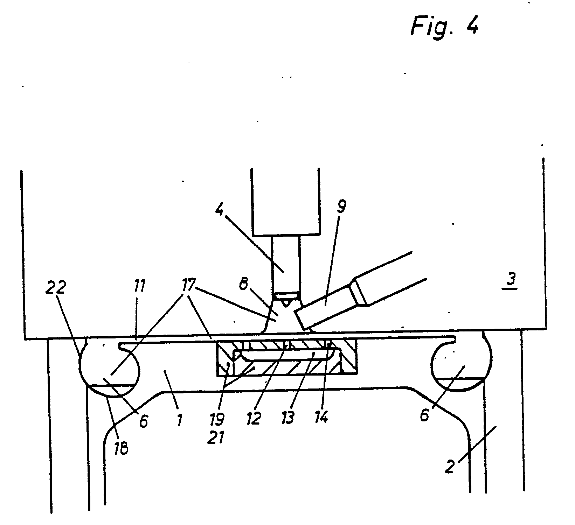

In der Fig. 4 ist eine Ausführung dargestellt, die für einen zündunwilligen Brennstoff vorgesehen ist. Anstelle der Platte 19 in Fig. 3 ist ein Bohlkörper 21 als Einsatz vorgesehen. Dieser Hohlkörper 21 kann vorteilhaft aus Keramik oder aus hochwarmfesten Metallen mit schlechten Wärmeleiteigenschaften hergestellt sein. Der Hohlkörper 21 besitzt eine zentrische Bohrung 12, sowie einen Hohlraum 13, der sich zylinderartig im Innern über fast die gesamte Grundfläche des Hohlkörpers 21 erstreckt. An dem äußeren Umfang des Hohlkörpers sind weitere Bohrungen 14 angeordnet, welche ebenfalls eine Verbindung zwischen dem Brennraumes 17 und dem Hohlraum 13 herstellen. Gegenüber den vorangegangenen Ausführungsbeispielen dient die Glühkerze 9 nur zum Starten. Als Einspritzdüse kann beispielsweise eine Drosselzapfendüse verwendet werden.

Ein Teil des zentrischen Brennstoffstrahls der Einspritzdüse 4 wird durch die Bohrung 12 in den Hohlraum 13 des Hohlkörpers 11 eingesoritzt. Dort reagiert der Brennstoff mit dem dort befindlichen Sauerstoff, entzündet sich an den heißen Wänden der Zündkammer und verbrennt, wobei die heißen Verbrennungsgase durch die kreisförmig angeordneten Bohrungen 14 ausgeblasen werden. Die radial nach außen auf das Zylinderrohr 2 gerichtete Quetschströmung des Brennstoff-Luft-Gemisches trifft auf das aus den Bohrungen 14 austretende Verbrennungsgas, wobei das Verbrennungsgas das radial nach außen strömende Brennstoff-Luft-Gemisch entzündet. Darüber hinaus kann der Hohlkörper 21 selbst in vorteilhafter Weise als Glühzündungsquelle arbeiten. Das Prinzip dieses Hohlkörpers 21 beruht darauf, daß er sich durch die in seinem Inneren erfolgende Verbrennung soweit erhitzt, daß er seinerseits als Zündquelle dient. Auf diese Art lassen sich selbst die zündunwilligsten Kraftstoffe verarbeiten. Es kann zweckmäßig sein, zwei verschiedene Kraftstoffe durch eine Einspritzdüse derart einzuspritzen, daß zentrisch handelsübliches Dieselöl in den Hohlraum 13 des Hohlkörpers 12 eingebracht wird, und radial nach außen ein zündunwilliger Hauptbrennstoff.

Weiterhin ist in Fig. 4 eine im Querschnitt halbkreisförmige, im wesentlichen jedoch ringförmige Ausnehmung 22 im Zylinderrohr 2 vorgesehen. Die ringförmige Ausnehmung 22 bildet zusammen mit der Aussparung 18 im Kolben 1 den torusartigen Raum 6. Es kann zweckmäßig sein, den torusartigen Raum 6 radial der Quetschströmung gegenüberliegend im Zylinderrohr 2 anzuordnen. In diesem Fall sind dann sowohl der Zylinderkopf 3 als auch der Kolben 1 völlig eben und glatt ausgebildet.

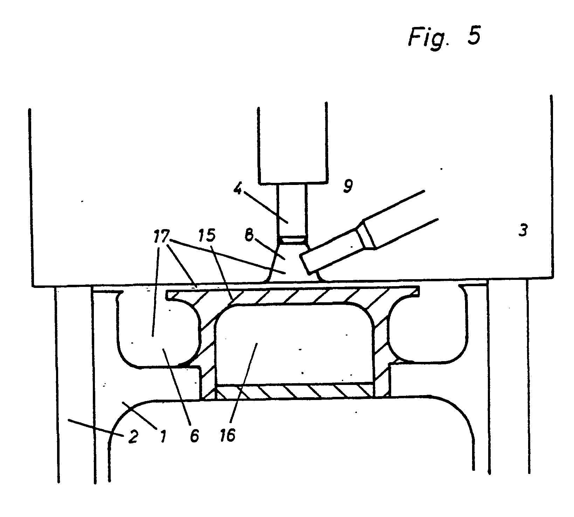

In Fig. 5 ist als zentrischer Einsatz im Kolben 1 ein pilzartiger Körper 15 aus hochwarmfestem Material vorgesehen. Für diesen Zweck eignet sich ebenfalls Keramik, aber auch jedes andere schlecht wärmeleitende Material mit hoher Wärmekapazität. Weiterhin ist der torusartige Raum 6 nicht am äußeren Umfang 5 des Kolbens 1 vorgesehen, sondern ist zwischen dem Einsatz 15 und dem Kolben 1 im Kolbenboden 7 gebildet.

Der pilzartige Körper 15 erhitzt sich im Laufe der Betriebszeit der Hubkolbenbrennkraftmaschine derart, daß er das Brennstoff-Luft-Gemisch entzündet. Dadurch kann die Verbrennung in dem torusartigen Raum 6 besonders günstig verlaufen. Dies wird insbesondere durch einen zentralen Hohlraum 16 in dem pilzartigen Einsatz 15 erreicht, durch den eine Wärmeableitung von dem pilzartigen Körper 15 in den gekühlten Kolben 1 erschwert wird.

**Patentansprüche**

1. Verfahren zum Betreiben einer Hubkolbenbrennkraftmaschine mit einem Brennraum (17), in dem Luft durch die Bewegung eines Kolbens (1) verdichtet und Brennstoff von einer in der Zylinderachse angeordneten Einspritzdüse (4) eingespritzt wird und der Brennstoff mit der verdichteten Luft ein Brennstoff-Luftgemisch bildet, wobei der Brennraum (17) im Bereich des Kolbenumfanges einen torusartigen Raum (6) sowie eine im Zylinderkopf (3) angeordnete Mulde (8) aufweist und die Verbrennung des Brennstoff-Luftgemisches in mehreren Phasen abläuft, dadurch gekennzeichnet, daß die gesamte Brennstoffmenge kurz vor dem oberen Totpunkt des Kolbens (1) während des Zündverzuges in die Mulde (8) eingebracht wird und dort ein fettes Gemisch bildet, wobei zwischen der Mulde (8) und dem torusartigen Raum (6) im Bereich der oberen Totpunktstellung des Kolbens (1) nur eine Verbindung über den minimal notwendigen Kolbenspalt (11) besteht, daß in einer ersten Phase das Brennstoff-Luft-Gemisch an einem vorgebbaren Entzündungsort in der Mulde (8) gezündet wird, so daß in einer zweiten Phase eine Flammenfront durch das fette Gemisch läuft, das sich dabei ausdehnt und eine von der Mulde (8) radial nach außen gerichtete Quetschströmung verstärkt, und in einer dritten Phase der Verbrennung das teilverbrannte Gemisch in den torusartigen Raum (6) gelangt, wo das Gemisch aufgrund von dessen besonderer konstruktiver Gestaltung einen Wirbel bildet, in dem die Verbrennung unter Sauerstoffüberschuß fortschreitet, und daß in einer vierten Phase das Verbrennungsgas aus dem Wirbel heraus als Antiquetschströmung in das durch den Abwärtshub des Kolbens sich vergrößernde Volumen des Kolbenspaltes (11) in Richtung auf den Entzündungsort strömt und die Verbrennung zum Abschluß bringt.

2. Verfahren nach Anspruch 1, dadurch gekennzeichnet, daß sich der Wirbel etwa torusförmig ausbildet, wobei das brennende Gemisch bzw. die Verbrennungsgase um die ringförmige Achse des Toruskörpers kreist bzw. kreisen.

3. Verfahren nach Anspruch 1, dadurch gekennzeichnet, daß die Luft drallfrei in den Brennraum (17) angesaugt wird.

4. Verfahren nach Anspruch 1, dadurch gekennzeichnet, daß der Brennstoff von einer in der Nähe des Einspritzortes angeordneten Glühzündungsquelle, vorzugsweise einer Glühkerze (9), entzündet wird.

5. Verfahren nach einem der vorhergehenden Ansprüche, dadurch gekennzeichnet, daß der Brennstoff von einer Einspritzdüse (4) mit zumindest einem auf den Kolben (1) gerichteten Strahl eingebracht wird.

6. Verfahren nach Anspruch 5, dadurch gekennzeichnet, daß der Strahl parallel zur Achse des Kolbens (1) gerichtet ist.

7. Verfahren nach Anspruch 5, dadurch gekennzeichnet, daß der Brennstoff von mehreren etwa radial nach außen gerichteten Strahlen eingebracht wird, wobei die Strahlen etwa auf einem Kreisring auf der brennraumseitigen Wandung des Kolbens (1) mit etwa dem gleichen Winkel auftreffen.

8. Verfahren nach Anspruch 5, dadurch gekennzeichnet, daß die Strahllänge zwischen der Einspritzdüse (4) und dem Kolben (1) für zumindest eine teilweise Vermischung des Brennstoffes mit der Luft zum Brennstoff-Luft-Gemisch sowie für eine exakte Umlenkung dieses Gemisches an der brennraumseitigen Wandung des Kolbens (1) ausreichend gewählt ist, und daß das Brennstoff-Luft-Gemisch auf dieser Strahllänge zündet.

9. Verfahren nach Anspruch 1, dadurch gekennzeichnet, daß der Brennstoff im warmgelaufenen Zustand der Hubkolbenbrennkraftmaschine von einer extern ungeheizten Glühzündungsquelle entzündet wird, welche die Zündenergie für die Verbrennung liefert.

10. Hubkolbenbrennkraftmaschine zur Durchführung des Verfahrens nach Anspruch 1 mit zumindest einem Zylinder, der mit einem Zylinderrohr (2), einem Zylinderkopf (3) und einem Kolben (1) versehen ist, mit einem Brennraum (17), der eine im Zylinderkopf (3) angeordnete Mulde (8) und eine im Querschnitt etwa halbkreis oder kreisförmige Aussparung (18) aufweist, die einen torusartigen Raum (6) bildet, der im Zylinderkopf (3), im Kolben (1) und/oder im Zylinderrohr (2) vorgesehen ist, sowie mit einer Einspritzdüse (4), die in der Zylinderachse sitzend direkt in die Mulde (8) mündend angeordnet ist, dadurch gekennzeichnet, daß die brennraumseitigen Flächen des Kolbens (1) und des Zylinderkopfes (3) in etwa parallel zueinander und vorzugsweise glatt ausgebildet sind, daß zwischen dem torusartigen Raum (6) und der Mulde (8) im Bereich der oberen Totpunktstellung des Kolbens (1) nur eine Verbindung über den minimal notwendigen Kolbenspalt (11) besteht und daß die Mulde (8) den Entzündungsort des Brennraums (17) umschließt.

11. Hubkolbenbrennkraftmaschine nach Anspruch 10, dadurch gekennzeichnet, daß der torusartige Raum (6) am brennraumseitigen Ende des Kolbens (1) angeordnet ist.

12. Hubkolbenbrennkraftmaschine nach Anspruch 11, dadurch gekennzeichnet, daß die Aussparung (18) am äußeren Umfang (5) des Kolbens vorgesehen ist, wobei der torusartige Raum (6) über den gesamten Umfang (5) des Kolbens (1) teilweise zum Zylinderrohr (2) und zum Zylinderkopf (3) hin geöffnet ist.

13. Hubkolbenbrennkraftmaschine nach Anspruch 12, dadurch gekennzeichnet, daß eine ringförmige Ausnehmung (22) am inneren Umfang des Zylinderrohres (2) vorgesehen ist, welche in oberer Totpunktlage des Kolbens (1) der Aussparung (18) im Kolben (1) radial gegenüberliegend angeordnet ist, wobei die Aussparung (18) und die Ausnehmung (22) zusammen den torusartigen Raum (6) formen.

14. Hubkolbenbrennkraftmaschine nach Anspruch 12, dadurch gekennzeichnet, daß in dem Zylinderrohr (2) an dessen inneren Umfang (5) ein vorzugsweise aus Keramik, insbesondere Zirkonoxyd, gefertigter Ring (20) eingesetzt ist, der axial an den Zylinderkopf (3) anschließt.

15. Hubkolbenbrennkraftmaschine nach Anspruch 11, dadurch gekennzeichnet, daß der Kolben (1) aus zumindest zwei getrennten Bauteilen besteht, die den torusartigen Raum (6) begrenzen.

16. Hubkolbenbrennkraftmaschine nach Anspruch 10, dadurch gekennzeichnet, daß in die Mulde (8) eine Glühzündungsquelle, vorzugsweise eine Glühkerze (9), hineinragt.

17. Hubkolbenbrennkraftmaschine nach Anspruch 10, dadurch gekennzeichnet, daß das Volumen der Mulde (8) kleiner als das Volumen des torusartigen Raumes (6) ist und daß zwischen Einspritzdüse (4) und brennraumseitiger Wandung des Kolbens (1) — über die Länge eines Einspritzstrahles der Einspritzdüse (4) betrachtet — ein freies Volumen besteht.

18. Hubkolbenbrennkraftmaschine nach Anspruch 17, dadurch gekennzeichnet, daß die Mulde (8) als kegelstumpfförmiger Raum mit zur Zylinderachse paralleler Achse ausgebildet ist.

19. Hubkolbenbrennkraftmaschine nach Anspruch 10, dadurch gekennzeichnet, daß im Kolben (1) axial der Einspritzdüse (4) gegenüberliegend ein Einsatz, vorzugsweise eine Platte (19), angeordnet ist.

20. Hubkolbenbrennkraftmaschine nach Anspruch 19, dadurch gekennzeichnet, daß der Einsatz ein Hohlkörper (21) mit einem Hohlraum (13) ist und dieser eine zentrale Öffnung (12) sowie mehrere kreisförmig verteilte Öffnungen (14) zum Brennraum (17) hin aufweist.

21. Hubkolbenbrennkraftmaschine nach Anspruch 20, dadurch gekennzeichnet, daß die Einspritzdüse (4) eine zentrische Austrittsöffnung und mehrere weitere kreisförmig angeordnete Austrittsöffnungen aufweist und daß die durch die zentrische Austrittsöffnung der Einspritzdüse (4) eingespritzte Brennstoffmenge über den gesamten Lastbereich der Hubkolbenbrennkraftmaschine weitgehend konstant ist.

22. Hubkolbenbrennkraftmaschine nach Anspruch 19, dadurch gekennzeichnet, daß der Einsatz aus Keramik, vorzugsweise Zirkonoxyd, hergestellt ist.

23. Hubkolbenbrennkraftmaschine nach Anspruch 10, dadurch gekennzeichnet, daß der Kolben (1), das Zylinderrohr (2) und der Zylinderkopf (3) aus Schwermetall, beispielsweise Grauguß, Stahl oder entsprechenden Legierungen, hergestellt sind.

24. Hubkolbenbrennkraftmaschine nach Anspruch 23, dadurch gekennzeichnet, daß der Kolben (1) und der Zylinderkopf (3) brennraumseitig mit Keramik, beispielsweise Zirkonoxyd, beschichtet sind.

**Revendications**

1. Procédé de mise en oeuvre d'un moteur à combustion interne à pistons axiaux comportant une chambre de combustion (17) dans laquelle un piston a un mouvement comprimé de l'air et qui reçoit du carburant injecté par un injecteur (4) placé dans l'axe du cylindre, le carburant se mélangeant à l'air comprimé pour former un mélange carburant/air, la chambre de combustion (17) ayant une cavité toroïdale (6) au niveau de la périphérie du piston ainsi qu'une auge (8) dans la culasse (3), la combustion du mélange carburant/air se faisant en plusieurs phases, procédé caractérisé en ce que l'ensemble du mélange de carburant est introduit dans l'auge (8) au cours du retard à l'allumage, peu avant que le piston (1) n'atteigne son point mort haut, et forme à cet endroit un mélange riche, et entre l'auge (8) et la cavité toroïdale (6), au niveau de la position du point mort haut du piston (1), il ne subsiste qu'un intervalle de piston (7), minimal, nécessaire, et en ce qu'au cours d'une première phase, le mélange carburant/air est allumé en un point d'allumage prédéterminé dans l'auge (8) pour qu'au cours d'une seconde phase, un front de flamme traverse le mélange riche et se développe et accentue un écoulement écrasé, dirigé radialement vers l'extérieur de l'auge (8) et en ce qu'au cours d'une troisième phase de combustion, le mélange partiellement brûlé arrive dans la cavité toroïdale (6) dans laquelle du fait de la structure constructive particulière de cette cavité, le mélange tourbillonne et la combustion se poursuit en présence d'un excédent d'oxygène, et en ce qu'au cours d'une quatrième phase, le gaz de combustion sort du tourbillon comme écoulement s'opposant à l'écrasement pour passer dans le volume qui va en augmentant sous l'effet de la course descendante du piston, pour s'écouler en direction de la zone d'allumage et conclure la combustion.

2. Procédé selon la revendication 1, caractérisé en ce que le tourbillon se développe sous une forme sensiblement toroïdale et le mélange en combustion ou les gaz de combustion tournent autour de l'axe annulaire du corps toroïdal.

3. Procédé selon la revendication 1, caractérisé en ce que l'air est aspiré sans mouvement de rotation dans la chambre de combustion (17).

4. Procédé selon la revendication 1, caractérisé en ce que le carburant est allumé par une source d'allumage par incandescence placée à proximité du lieu de son injection, de préférence, une bougie d'allumage (9).

5. Procédé selon l'une des revendications précédentes, caractérisé en ce que le carburant est fourni par un injecteur (4) avec un jet au moins dirigé sur le piston (1).

6. Procédé selon la revendication 5, caractérisé en ce que le jet est dirigé parallèlement à l'axe du piston (1).

7. Procédé selon la revendication 5, caractérisé en ce que le carburant est introduit sous la forme de plusieurs jets dirigés radialement vers l'extérieur, les jets arrivant sur un cercle de la paroi du piston (1), sur sa face située du côté de la chambre de combustion, et suivant un angle sensiblement identique.

8. Procédé selon la revendication 5, caractérisé en ce que la longueur des jets entre l'injecteur (4) et le piston (1) est choisie suffisante pour assurer au moins un mélange partiel du carburant avec l'air pour former le mélange carburant/air et assurer une déviation exacte de ce mélange vers la paroi du piston (1) située du côté de la chambre de combustion, et pour que le mélange carburant/air s'allume sur cette longueur de jet.

9. Procédé selon la revendication 1, caractérisé en ce que le carburant est allumé par une source d'allumage à incandescence, externe, lorsque le moteur à combustion interne à pistons axiaux est en phase de chauffage, cette source fournissant l'énergie d'allumage nécessaire à la combustion.

10. Moteur à combustion interne à pistons axiaux pour la mise en oeuvre du procédé de la revendication 1 avec au moins un cylindre comportant un fût de cylindre (2) et une culasse (3) ainsi qu'un piston (1), une chambre de combustion (17) et une auge (8) dans la culasse (3) et une cavité (18) à section sensiblement semi-circulaire ou circulaire formant une enceinte toroïdale (6) prévue dans la culasse (3), dans le piston (1) et/ou dans le fût de cylindre (2) et injecteur (4) prévu directement dans l'axe du cylindre, en débouchant dans l'auge (8), moteur caractérisé en ce que la face du piston (1) et celle de la culasse (3) du côté de la chambre de combustion sont sensiblement parallèles et de préférence lisses et en ce qu'entre la chambre toroïdale (6) et l'auge (8), au niveau de la position du point mort haut du piston (1), il ne subsiste qu'une liaison par l'intervalle de piston (7) minimum, nécessaire et l'auge (8) délimite la zone d'allumage de la chambre de combustion (17).

11. Moteur à combustion interne à pistons axiaux selon la revendication 10, caractérisé en ce que la chambre toroïdale (6) est prévue à l'extrémité du piston (1) située du côté de la chambre de combustion.

12. Moteur à combustion interne à pistons axiaux selon la revendication 11, caractérisé en ce que la cavité (18) est prévue à la périphérie extérieure du piston et la chambre toroïdale (6) est ouverte sur toute la périphérie (5) du fût de cylindre (2), partiellement vers le fût de cylindre (2) et partiellement vers la culasse (3).

13. Moteur à combustion interne à pistons axiaux selon la revendication 12, caractérisé par une cavité annulaire (22) prévue à la périphérie intérieure (5) du fût de cylindre (2), cavité, qui lorsque le piston (1) est en position de point mort haut, se trouve radialement en regard de la cavité (18) du piston (1), la cavité (18) et la cavité (22) formant en combinaison la chambre toroïdale (6).

14. Moteur à combustion interne à pistons axiaux selon la revendication 12, caractérisé en ce que dans le fût de cylindre (2) au niveau de la périphérie intérieure (5), il est prévu une bague (20) de préférence en céramique notamment en oxyde de zirconium et qui est adjacente axialement à la culasse (3).

15. Moteur à combustion interne à pistons axiaux selon la revendication 11, caractérisé en ce que le piston (1) se compose d'au moins deux composants distincts qui délimitent une chambre toroïdale (6).

16. Moteur à combustion interne à pistons axiaux selon la revendication 10, caractérisé par une source d'allumage prévue dans l'auge (8), de préférence une bougie d'allumage (9).

17. Moteur à combustion interne à pistons axiaux selon la revendication 10, caractérisé en ce que le volume de l'auge (8) est inférieur au volume de la chambre toroïdale (6) et en ce qu'entre l'injecteur (4) et la paroi du piston (1) tournée vers la chambre de combustion, vue suivant la longueur d'un jet d'injection de l'injecteur (4), il subsiste un volume libre.

18. Moteur à combustion interne à pistons axiaux selon la revendication 17, caractérisé en ce que l'auge (8) est une cavité en forme de tronc de cône dont l'axe est parallèle à l'axe du cylindre.

19. Moteur à combustion interne à pistons axiaux selon la revendication 10, caractérisé par un insert de préférence une plaque (19) prévue dans le piston (1) axialement en regard de l'injecteur (4).

20. Moteur à combustion interne à pistons axiaux selon la revendication 19, caractérisé en ce que l'insert est un corps creux (21) muni d'une cavité (13) avec une ouverture centrale (12) et plusieurs ouvertures (14) réparties suivant un cercle dirigées vers la chambre de combustion (17).

21. Moteur à combustion interne à pistons axiaux selon la revendication 20, caractérisé en ce que la buse d'injection (4) présente une ouverture de sortie centrale et plusieurs ouvertures de sortie réparties en cercle, et en ce que la quantité de carburant injectée par l'orifice de sortie central de l'injecteur (4) est très largement constante dans toute la plage de charge du moteur à combustion interne à pistons axiaux.

22. Moteur à combustion interne à pistons axiaux selon la revendication 19, caractérisé par l'utilisation de matière céramique, de préférence par de l'oxyde de zirconium.

23. Moteur à combustion interne à pistons axiaux selon la revendication 10, caractérisé en ce que le piston (1) et le fût de cylindre (2) ainsi que la culasse (3) sont en un métal lourd par exemple en fonte, en acier ou en des alliages correspondants.

24. Moteur à combustion interne à pistons axiaux selon la revendication 23, caractérisé en ce que le piston (1) et la tête de cylindre (3) sont revêtus de céramique par exemple de l'oxyde de zirconium sur leur face tournée vers la chambre de combustion-

**Claims**

1. A method of operating a reciprocating-piston internal combustion engine having a combustion chamber (17), in which air is compressed by the stroke of the piston (1), into which fuel is injected through an injection nozzle (4) arranged in alignment with the cylinder axis and in which the fuel and the compressed air form a fuel-air mixture, wherein the combustion chamber (17) includes a toroid-like space (6) disposed in the region of the piston's perimeter and also a trough (8) disposed in the cylinder head (3), and wherein the combustion of the fuel-air mixture takes place in stages, characterized in that the entire quantity of fuel is fed — shortly prior to the piston (1) reaching its top dead-centre during the ignition lag — into the trough (8) and forms a rich mixture therein, that, when the piston (1) has reached a position in the region of its top dead-centre, the only link between the trough (8) and the toroid-like space (6) is the one provided by the smallest essentially required piston clearance (11), that the fuel-air mixture is ignited during the first stage at a predeterminable ignition point in the trough (8) so that a flame front moves during the second stage through the rich mixture which, as a result thereof, expands and intensifies a radially outwardly directed squeezed stream from the trough (8), that the partly burnt mixture reaches during the third stage the toroid-like space (6) which, due to its particular shape, causes the mixture to be whirled, that combustion with a surplus of oxygen continues in this whirl, and in that the combustion gas flows during the fourth stage as a squeeze-relieving stream from the whirl into the — by the piston's downward stroke — expanding volume towards the ignition point and thus terminates the combustion.

2. A method according to claim 1, characterized in that the whirl is a substantially toroidal one, and in that the burning mixture and, respectively, the combustion gases revolves, or revolve, around the ring-shaped axis of the toroidal member.

3. A method according to claim 1, characterized in that the air is sucked irrotationally into the combustion chamber (17).

4. A method according to claim 1, characterized in that the fuel is ignited by incandescent ignition means, preferably by a glow plug (9), arranged in the vicinity of the injection point.

5. A method according to any of the preceding claims, characterized in that the fuel is injected from the nozzle (4) by way of at least one jet directed to the piston (1).

6. A method according to claim 5, characterized in that the jet streams in a direction parallel with the axis of the piston (1).

7. A method according to claim 5, characterized in that the fuel is injected by way of a number of jets directed substantially radially outwardly, and in that the jets, which are inclined at substantially the same angle, strike the piston's (1) face bordering the combustion chamber substantially on a circular ring.

8. A method according to claim 5, characterized in that the jet length between the nozzle (4) and the piston (1) is selected so as to suffice for at least partly mixing the fuel with the air to form the fuel-air mixture, for accurately diverting this mixture along the piston's (1) face bordering the combustion chamber and for igniting the mixture along this selected jet length.

9. A method according to claim 1, characterized in that the fuel, in the engine's heated-up state, is ignited by externally unfired incandescent ignition means providing the ignition power for the combustion.

10. A reciprocating-piston internal combustion engine for implementing a method according to claim 1, the engine having at least one cylinder fitted with a liner (2), the cylinder head (3), the piston (1) and the combustion chamber (17), wherein the combustion chamber includes the trough (8) disposed in the cylinder head (3) and a — cross-sectionally — substantially semicircular or circular recess (18) forming the toroid-like space (6) disposed in the cylinder head (3), in the piston (1) and/or in the liner (2), and wherein the cylinder is fitted with the injection nozzle (4) arranged in alignment with the cylinder axis and terminating directly in the trough (8), characterized in that the respective faces of the piston (1) and of the cylinder head (3) bordering the combustion chamber extend substantially parallel with each other and, preferably, are smooth, that, when the piston (1) is in a position in the region of its top dead-centre, the only link between the space (6) and the trough (8) is the one provided by the smallest essentially required piston clearance (11), and in that the trough (8) limits the ignition point of the combustion chamber (17).

11. An engine according to claim 10, characterized in that the space (6) is disposed in the piston's (1) end portion bordering the combustion chamber.

12. An engine according to claim 11, characterized in that the recess (18) is disposed at the outer peripheral wall (5) of the piston, and in that a part of the space (6) is open — around the entire peripheral wall (5) of the piston (1) — towards the liner (2) and the cylinder head (3).

13. An engine according to claim 12, characterized in that the inner peripheral wall of the liner (2) is provided with an annular recess (22) which, when the piston (1) has reached its top dead-centre, is radially opposite the recess (18) in the piston (1), and in that the recess (18) together with the recess (22) form the toroid-like space (6).

14. An engine according to claim 12 characterized in that a ring (20), preferably made of a ceramic material, especially zirconium oxide, is inserted into the liner (2) at the inner peripheral wall thereof and is axially adjacent to the cylinder head (3).

15. An engine according to claim 11, characterized in that the piston (1) is made up of at least two separate components defining the toroid-like space (6).

16. An engine according to claim 10, characterized in that the incandescent ignition means, preferably a glow plug (9), protrude into the trough (8).

17. An engine according to claim 10, characterized in that the — trough's (8) volume is smaller than that of the space (6), and in that there is — viewed along the length of the jet injected through the nozzle (4) — a free volume between the nozzle (4) and the piston's (1) face bordering the combustion chamber.

18. An engine according to claim 17, characterized in that the trough (8) is frustrum-shaped and its axis extends parallel with that of the cylinder.

19. An engine according to claim 10, characterized in that an insert, preferably a plate (19), is arranged in the piston (1) in a position axially opposite the nozzle (4).

20. An engine according to claim 19, characterized in that the insert is a hollow member (21) having a cavity (13), and in that the hollow member is provided with one central aperture (12) and a number of annularly spaced apertures (14) for communication with the combustion chamber (17).

21. An engine according to claim 20, characterized in that the nozzle — (4) is provided with one central orifice and a number of additional annularly arranged orifices, and in that the quantity of fuel injected through the nozzle's (4) central orifice is substantially constant over the engine's entire load range.

22. An engine according to claim 19, characterized in that the insert is made of a ceramic material, preferably zirconium oxide.

23. An engine according to claim 10, characterized in that the piston (1), the liner (2) and the cylinder head (3) are made of a heavy metal, for example cast iron, steel or of a corresponding alloy.

24. An engine according to claim 23, characterized in that the respective faces of the piston (1) and of the cylinder head (3) bordering the combustion chamber are coated with a ceramic material, for example zirconium oxide.

Fig. 1

Fig. 2

Fig. 3

*Fig. 4*

*Fig. 5*